# EUROPEAN PATENT APPLICATION

(11) **EP 1 541 038 A1**
(43) Date of publication of application: **15.06.2005**
(21) Application number: 03765373.0
(22) Date of filing: 24.07.2003
(51) Int. Cl.: A23L 1/20, A23L 1/187, A23L 1/06

(54) **PROCESSED SOYBEAN MATERIAL AND METHOD OF PRODUCING THE SAME**

(30) Priority: 24.07.2002 JP 2002215810
(71) Applicant: Peace Beans Co., Ltd., Tokyo 101-0032 (JP)
(72) Inventor: YAMABE, Akira, Edogawa-ku, Tokyo 134-0087 (JP); KOBAYASHI, Ikuo, Yokohama-shi, Kanagawa 247-0028 (JP); TANAKA, Koretake, Machida-shi, Tokyo 195-0054 (JP)
(74) Representative: Epping Hermann & Fischer
(86) International application number: PCT/JP2003/009397
(87) International publication number: WO 2004/008880

(57) **Abstract**

A processed soybean material is produced by milling starting soybeans (non-defatted soybeans or defatted soybeans) to generate soybean powder, adding water to the soybean powder to make a solution containing the soybean powder, swelling the soybean powder, heating the solution containing the swollen soybean powder and then pressurizing the heated solution. Use of the processed soybean material thus obtained makes it possible to produce a processed soybean food which is free from the characteristic smell or coarseness of soybeans and contains fiber components.

## Description

### Technical Field

The present invention relates to a processed soybean material and a method of producing the same, and particularly relates to a processed soybean material suitable as a processed material for use in a dessert food, a subsidiary food, etc. and a method of producing the same.

### Background Art

Soybeans are used as a starting material for processed foods (processed soybean foods) such as soybean curd (including foods made from cooked/processed soybean curd), soybean paste, soy source, fermented soybeans, soybean flour, etc. as an important source of protein in dietary life. Particularly, effects of bioactive components such as lecithin, saponin, isoflavone, etc. contained in soybeans have recently garnered attention, and soybeans and processed soybean foods are noticed as health foods.

However, use of soybean powder originating from milled soybeans as a starting material of a processed soybean food gives soybean's characteristic smells (raw smell and unpleasant smell) and coarse texture (coarseness) to the obtained processed soybean food. It has been revealed that the soybean's characteristic smells come from n-hexanal, which is an aliphatic carbonyl compound contained in soybeans. It has also been revealed that n-hexanal is produced due to soybean oil being oxidized by an enzyme called lipoxygenase.

Therefore, the soybean's characteristic smells and coarseness are removed from many of the processed soybean foods, by using, as a starting material for these foods, "soymilk" obtained by cleaning, soaking, milling, hydrolyzing, heating, and then filtrating starting soybeans (non-defatted soybeans or defatted soybeans). "Soybean protein" extracted from defatted soybeans, from which soybean oil has been squeezed, is also used as a starting material for processed soybean foods.

Further, to prevent the soybean's characteristic smells, there have been developed a technique for inactivating lipoxygenase by heating soybeans before milling them, and a technique for breeding soybeans to produce a variety lacking in lipoxygenase. These techniques are used for improving soymilk and soybean protein products.

Soybean curd, one of the processed soybean foods, is normally produced by adding a coagulant (ionic membrane bittern) to soymilk obtained by removing bean curd refuse from the starting soybeans and then immersing the soymilk in water. However, there has recently been developed a technique for converting whole soybeans into soybean curd. According to this method, soybean curd is produced by using hydrolyzed, stirred, and heated soybean powder as a base. However, there are problems that soybean curd obtained by this technique still has the soybean's characteristic smells and is unsmooth.

Furthermore, soymilk and soybean protein used as starting materials for many processed soybean foods have the fiber component inherent to soybeans removed through the production process thereof. As the effects of fiber component contained in foods have drawn attention lately, it is demanded that a processed soybean food not including the soybean's characteristic smells or coarseness but including fiber component be produced.

### Disclosure of Invention

The present invention has been made in view of the above-described problem, and it is an object of the present invention to provide a processed soybean material which is made from starting soybeans and from which a processed soybean food having no soybean's characteristic smells or coarseness and including soybean fiber can be produced, and a method of producing the same.

To achieve the above object, a method of producing a processed soybean material according to a first aspect of the present invention is characterized by comprising:
a milling step of milling starting soybeans to generate soybean powder;
a hydrolyzing/swelling step of adding water to the soybean powder generated in said milling step to make a solution containing the soybean powder, and swelling the soybean powder contained in the solution; and
a heating step of heating the solution containing the soybean powder swollen in said hydrolyzing/swelling step.

The method may further comprise a pressurizing step of pressuring the solution heated in the heating step.

In the pressurizing step, the solution is pressurized at a pressure of, for example, 150 kg/cm² to 200 kg/cm². Further, in the pressurizing step, the solution may be pressurized with fat and oil added thereto.

In the milling step, it is preferred that the starting soybeans be milled such that the size of the soybean powder is 20 µm to 60 µm.

In the hydrolyzing/swelling step, it is preferred that water be added to the soybean powder such that 1 weight % to 15 weight % of soybean powder is contained in the solution containing the soybean powder.

In the hydrolyzing/swelling step, it is preferred that the soybean powder be swelled at not greater than 10°C for at least 30 minutes.

In the heating step, it is preferred that the solution containing the soybean powder be heated at 95°C to 130°C for at least 5 minutes.

The processed soybean material produced according to the present invention is used for producing, for example, dessert foods such as pudding, jelly, bavarois, mousse, ice cream, yogurt, etc. or subsidiary foods such as soup, soybean curd, seasoning, etc.

A processed soybean material according to a second aspect of the present invention is characterized by being obtained by milling starting soybeans, adding water to resultant soybean powder to obtain a solution containing the soybean powder, swelling the soybean powder in the solution, and heating the solution containing the swollen soybean powder.

The processed soybean material may be obtained by further pressurizing the heated solution containing the soybean powder. Further, the processed soybean material may be obtained by pressuring the heated solution containing the soybean powder at a pressure of, for example, 150 kg/cm² to 200 kg/cm². Further, the processed soybean material may be obtained by adding fat and oil to the heated solution containing the soybean powder and pressurizing the solution to which fat and oil are added.

It is preferred that the milled soybean powder have a size of 20 µm to 60 µm.

It is preferred that the solution containing the soybean powder be obtained by mixing 1 weight % to 15 weight % of soybean powder and 85 weight % to 99 weight % of water.

It is preferred that the milled soybean powder be swelled at not greater than 10°C for at least 30 minutes.

It is preferred that the processed soybean material be obtained by heating the solution containing the swollen soybean powder at 95°C to 130°C for at least 5 minutes.

The processed soybean material according to the present invention can be suitably used as a material for, for example, the above-described dessert foods, subsidiary foods, etc.

### Best Mode for Carrying Out the Invention

A processed soybean material and a method of producing a processed soybean material according to the present invention will now be explained.

The processed soybean material according to the present invention is a processed material used for producing dessert foods (for example, pudding, jelly, bavarois, mousse, ice cream, yogurt, etc.) and subsidiary foods (for example, soup, soybean curd, seasoning, etc.)

The processed soybean material according to the present invention is obtained by milling starting soybeans, adding water to the resultant soybean powder, making the soybean powder swollen in the solution containing the soybean powder, and heating the solution containing the swollen soybean powder. In other words, the processed soybean material according to the present invention is produced through "the milling step of milling starting soybeans to form soybean powder", "the hydrolyzing/swelling step of adding water to the formed soybean powder to make a solution containing the soybean powder and swelling the soybean powder", and "the heating step of heating the solution containing the swollen soybean powder".

Further, the processed soybean material according to the present invention is produced through the pressurizing step of pressurizing the processed soybean material produced by the above-described method.

Next, the method of producing the processed soybean material according to the present invention will be explained.

First, starting soybeans (non-defatted soybeans or defatted soybeans) are milled to generate soybean powder. For example, a grinding machine such as a jet mill may be used as a means for milling the starting soybeans.

If the size of the soybean powder exceeds 60 µm, the processed soybean material feels coarse when used in a processed soybean food. As the soybean powder is smaller, the processed soybean material feels smoother with less coarseness when used in a processed soybean food. However, even if the size of the soybean powder is made smaller than 20 µm, this makes the texture no better but simply makes the milling of the starting soybeans difficult. Accordingly, it is preferred that the starting soybeans be milled so that the size of the soybean powder becomes 20 µm to 60 µm.

The starting soybeans may be thermally treated before they are milled. This is because thermal treatment makes lipoxygenase inactive and makes it harder for n-hexanal, the cause for the soybean's characteristic smells, to occur.

Next, water is added to the formed soybean powder to obtain a soybean solution and the soybean powder is swelled therein. This is because the soybean powder is easier to process if it absorbs sufficient moisture and becomes swollen (agenized). As the agenizing conditions, it is preferred that the soybean powder is hydrolyzed/swelled for at least 30 minutes at a temperature not higher than 10°C.

If the soybean powder exceeds 15 weight %, the processed soybean material feels coarse when used in a processed soybean food. Further, the soybean's characteristic smells appear. Meanwhile, if the soybean powder is less than 1 weight %, soybean components become scarce and amount of soybean fiber component is reduced in a processed soybean food. Accordingly, it is preferred that water to be added to the soybean powder be controlled in a manner that the soybean powder of 1 weight % to 15 weight % is included in the soybean solution. That is, it is preferred that soybean powder of 1 weight % to 15 weight % and water of 85 weight % to 99 weight % be mixed to make the soybean solution.

Then, the soybean solution is heated. Thereby, a processed soybean material, which is emulsified, is obtained. It is preferred that the soybean solution be heated for at least 5 minutes at 95°C to 130°C. This heating weakens the soybean's characteristic smells of the processed soybean material when used in a processed soybean food.

Finally, the heated soybean solution is pressurized. Thereby, a processed soybean material, which is uniformly emulsified, is obtained. It is preferred that the soybean powder solution be pressurized with a pressure of 150 to 200 kg/cm². With this pressure value, the soybean fiber can be fined, aiding in uniform emulsification. Uniform emulsification makes the processed soybean material hardly emit the soybean's characteristic smells and have a smooth texture, when it is used in a processed soybean food.

Before pressurizing, fat and oil (for example, seed oil from olive, grape, etc.) may be added to the heated soybean solution. By pressurizing the soybean solution after fat and oil are added thereto, a further uniformly emulsified processed soybean material can be produced.

The processed soybean material according to the present invention is produced in the way described above. This processed soybean material is produced by using not soymilk or soybean protein but the starting soybeans. Therefore, this processed soybean material contains the soybean's fiber and is suitable as a processed material for a processed soybean food as a health food. Further, if the processed soybean material according to the present invention is used in a processed soybean food, a processed soybean food having no soybean's characteristic smells or coarseness can be produced.

The present invention will be explained below by showing examples. However, the present invention is not limited to these examples. In the examples below, a dessert food or a subsidiary food was produced with the use of the processed soybean material according to the present invention and effects of the processed soybean material were confirmed.

### (Generation of Soybean Powder)

First, 10 kg of starting soybeans were milled with a jet mill to generate soybean powder to be contained in the processed soybean material. The starting soybeans were milled so that the soybean powder obtained by milling would have a size of 20 µm to 60 µm. The obtained soybean powder (whole fat soybean powder) weighed 9.2 kg.

### (Example 1)

A processed soybean material A was produced with the use of the above soybean powder.

Water was added to the soybean powder and a soybean solution containing 12 weight % of soybean powder was made. This soybean solution was kept heated for 5 minutes at 99°C, and then pressurized at 200 kg/cm². In this manner, the processed soybean material A, which was uniformly emulsified, was obtained.

Black sesame pudding was made with the use of the processed soybean material A. The blending ratio of the materials for black sesame pudding is shown in the below "material blending table for black sesame pudding". In the present example, black sesame pudding was made according to an ordinary pudding producing method.

### Material Blending Table for Black Sesame Pudding

| Name of Material | Blending Ratio (Weight %) |
|---|---|
| Processed Soybean Material A | 7.0 |
| Reduced Maltose | 32.0 |
| Olive Oil | 2.5 |
| Grape Seed Oil | 2.5 |
| Black Tahini | 2.5 |
| Black Toasted Sesame Seeds | 1.0 |
| Gelatinizing Agent | 1.5 |
| Lecithin | 0.1 |
| Water | 50.9 |
| Total | 100.0 |

Black sesame pudding obtained in this manner emitted no soybean's characteristic smells and had a smooth texture without coarseness.

### (Example 2)

A processed soybean material B was produced with the use of the above-described soybean powder.

1 kg of soybean powder, while being stirred, was added and mixed into 9 kg of water, and immersed therein for 30 minutes. Next, after once boiled, this soybean solution was further kept heated for 5 minutes at low heat. Then, after cooled to 75°C, the soybean solution was pressurized at 200 kg/cm². Thereby, the processed soybean material B, which was uniformly emulsified, was obtained.

Soybean curd was made with the use of the processed soybean material B made from this soybean powder.

First, the processed soybean material B was cooled to 6°C to 7°C. Next, the cooled processed soybean material B was poured into a vessel and sufficiently stirred with 50 ml of coagulant (ionic membrane bittern) added therein. Then, the processed soybean material B was kept at rest in hot water to be heated for 15 to 20 minutes, and then was cooled, thereby soybean curd was obtained.

The obtained soybean curd emitted no soybean's characteristic smells and had a smooth texture without coarseness.

### (Example 3)

A processed soybean material C was produced with the use of the above-described soybean powder.

First, 1.3 kg of soybean powder and 8.1 kg of water were poured into a tank and stirred therein, thereby a soybean solution was made. Next, this soybean solution was kept cooled for 12 hours at 7°C to 8°C. Then, the soybean solution kept cooled was poured into a sterilizing tank, heated to 100°C, and kept heated for 5 minutes. Next, 600g of grape seed oil was mixed and the result was maintained at 85°C for 5 minutes. Then, the result was cooled to 75°C and then pressurized by a homogenizer at 200 kg/cm². Thereby, the processed soybean material C, which was uniformly emulsified, was obtained.

Soybean soup was made with the use of this processed soybean material C.

First, the processed soybean material C was cooled to 6°C to 7°C. Next, the cooled processed soybean material C was transferred to an aging tank, and then further kept cooled, thereby soybean soup was obtained. The obtained soybean soup was a smooth soup having no coarseness and emitting no soybean's characteristic smells.

### (Example 4)

Ice cream was made with the use of the processed soybean material C obtained in the Example 3.

First, the processed soybean material C was sterilized by a heat exchanger at 85°C for 20 seconds. Next, after cooled at 5°C for 30 seconds, the processed soybean material C was aged for 12 hours at 5°C to make a soybean ice cream base. The obtained soybean ice cream base emitted no soybean's characteristic smells and had a smooth texture without coarseness, and thus was suitable as an ice cream base. If necessary, milk fat may be added. Then, sugar, a vanilla flavoring ingredient, a stabilization agent, etc. were added to this soybean ice cream base and the result was frozen, thereby vanilla ice cream was obtained. The obtained vanilla ice cream was good in taste, smell, and texture.

From these examples, it was revealed that if the processed soybean material according to the present invention is used in a processed soybean food, the obtained food has no soybean's characteristic smells and has a smooth texture without coarseness.

The present invention is not limited to the above-described embodiment, but may be modified and applied in various manners. For example, in the above-described embodiment, the present invention was explained by employing as an example, a case where the processed soybean material is produced by milling the starting soybeans to generate soybean powder, adding water to the generated soybean powder to make a solution containing the soybean powder and swell the soybean powder, heating the solution containing the swollen soybean powder, and then pressurizing the solution. However, the solution containing the soybean powder may not be pressurized after it is heated. In this case too, a food can be obtained that has no soybean's characteristic smells and has a smooth texture without coarseness.

### Industrial Applicability

The present invention can be effectively applied to production of a fine processed soybean food.

This application is based on Japanese Patent Application No. 2002-215810 filed on July 24, 2002 and including specification, claims, drawings and summary thereof. The disclosure of the above Japanese Patent Application is incorporated herein by reference in its entirety.

## Claims

1. A method of producing a processed soybean material, **characterized by** comprising:
a milling step of milling starting soybeans to generate soybean powder;
a hydrolyzing/swelling step of adding water to the soybean powder generated in said milling step to make a solution containing the soybean powder, and swelling the soybean powder contained in the solution; and
a heating step of heating the solution containing the soybean powder swollen in said hydrolyzing/swelling step.

2. The method of producing the processed soybean material according to claim 1, **characterized in that** in said milling step, the starting soybeans are milled such that the size of the soybean powder is 20µm to 60µm.

3. The method of producing the processed soybean material according to claim 1, **characterized in that** in said hydrolyzing/swelling step, water is added to the soybean powder such that 1 weight % to 15 weight % of soybean powder is contained in the solution containing the soybean powder.

4. The method of producing the processed soybean material according to claim 1, **characterized in that** in said hydrolyzing/swelling step, the soybean powder is swelled at not greater than 10°C for at least 30 minutes.

5. The method of producing the processed soybean material according to claim 1, **characterized in that** in said heating step, the solution containing the soybean powder is heated at 95°C to 130°C for at least 5 minutes.

6. The method of producing a processed soybean material according to claim 1, **characterized in** the processed soybean material is used for producing dessert foods including pudding, jelly, bavarois, mousse, ice cream, and yogurt or subsidiary foods including soup, soybean curd, and seasoning.

7. A method of producing a processed soybean material **characterized by** comprising:
a milling step of milling starting soybeans to generate soybean powder;
a hydrolyzing/swelling step of adding water to the soybean powder generated in said milling step to make a solution containing the soybean powder, and swelling the soybean powder contained in the solution;
a heating step of heating the solution containing the soybean powder swollen in said hydrolyzing/swelling step; and
a pressurizing step of pressurizing the solution heated in said heating step.

8. The method of producing the processed soybean material according to claim 7, **characterized in that** in said pressurizing step, the solution is pressurized at a pressure of 150 kg/cm² to 200 kg/cm².

9. The method of producing the processed soybean material according to claim 7, **characterized in that** in said pressurizing step, the solution is pressurized with fat and oil added thereto.

10. The method of producing the processed soybean material according to claim 7, **characterized in that** in said milling step, the starting soybeans are milled such that the size of the soybean powder is 20µm to 60µm.

11. The method of producing the processed soybean material according to claim 7, **characterized in that** in said hydrolyzing/swelling step, water is added to the soybean powder such that 1 weight % to 15 weight % of soybean powder is contained in the solution containing the soybean powder.

12. The method of producing the processed soybean material according to claim 7, **characterized in that** in said hydrolyzing/swelling step, the soybean powder is swelled at not greater than 10°C for at least 30 minutes.

13. The method of producing the processed soybean material according to claim 7, **characterized in that** in said heating step, the solution containing the soybean powder is heated at 95°C to 130°C for at least 5 minutes.

14. The method of producing the processed soybean material according to claim 7, **characterized in that** the processed soybean material is used for producing dessert foods including pudding, jelly, bavarois, mousse, ice cream, and yogurt or subsidiary foods including soup, soybean curd, and seasoning.

15. A processed soybean material **characterized by** being obtained by milling starting soybeans, adding water to resultant soybean powder to obtain a solution containing the soybean powder, swelling the soybean powder in the solution, and heating the solution containing the swollen soybean powder.

16. The processed soybean material according to claim 15, **characterized by** being obtained by further pressuring the heated solution containing the soybean powder.

17. The processed soybean material according to claim 15, **characterized by** being obtained by pressurizing the heated solution containing the soybean powder at a pressure of 150 kg/cm² to 200 kg/cm².

18. The processed soybean material according to claim 15, **characterized by** being obtained by adding fat and oil to the heated solution containing the soybean powder and pressuring the solution to which the fat and oil are added.

19. The processed soybean material according to claim 15, **characterized in that** the milled soybean powder has a size of 20µm to 60µm.

20. The processed soybean material according to claim 15, **characterized in that** the solution containing the soybean powder is obtained by mixing 1 weight % to 15 weight % of soybean powder and 85 weight % to 99 weight % of water.

21. The processed soybean material according to claim 15, **characterized in that** the milled soybean powder is swelled at not greater than 10°C for at least 30 minutes.

22. The processed soybean material according to claim 15, **characterized by** being obtained by heating the solution containing the swollen soybean powder at 95°C to 130°C for at least 5 minutes.

23. The processed soybean material according to claim 15 **characterized by** being used for producing dessert foods including pudding, jelly, bavarois, mousse, ice cream, and yogurt or subsidiary foods including soup, soybean curd, and seasoning.
